(19) **Europäisches Patentamt / European Patent Office / Office européen des brevets**

(11) **EP 3 278 317 B1**

(12) **EUROPEAN PATENT SPECIFICATION**

(45) Date of publication and mention
of the grant of the patent:
**16.11.2022 Bulletin 2022/46**

(21) Application number: **16713830.4**

(22) Date of filing: **24.03.2016**

(51) International Patent Classification (IPC):
G08G 1/16 *(2006.01)*     G06K 9/00 *(2022.01)*
G06K 9/62 *(2022.01)*     G01S 7/41 *(2006.01)*
G01S 7/48 *(2006.01)*     G01S 13/86 *(2006.01)*
G01S 13/89 *(2006.01)*     G01S 13/931 *(2020.01)*
G01S 17/00 *(2020.01)*     G01S 17/50 *(2006.01)*
G01S 17/931 *(2020.01)*     G06N 3/04 *(2006.01)*
G01S 17/86 *(2020.01)*     G01S 17/89 *(2020.01)*
G06V 10/82 *(2022.01)*     G06V 20/58 *(2022.01)*
G01S 13/50 *(2006.01)*

(52) Cooperative Patent Classification (CPC):
G08G 1/166; G01S 7/417; G01S 13/867;
G01S 13/89; G01S 13/931; G01S 17/50;
G01S 17/86; G01S 17/89; G01S 17/931;
G06K 9/6273; G06N 3/0445; G06V 10/82;
G06V 20/58; G01S 13/50; G01S 13/865;     (Cont.)

(86) International application number:
**PCT/EP2016/056616**

(87) International publication number:
**WO 2016/156236 (06.10.2016 Gazette 2016/40)**

(54) **METHOD AND ELECTRONIC DEVICE**

VERFAHREN UND ELEKTRONISCHE VORRICHTUNG

PROCÉDÉ ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2015 EP 15161897**

(43) Date of publication of application:
**07.02.2018 Bulletin 2018/06**

(73) Proprietor: **Sony Group Corporation
Tokyo 108-0075 (JP)**

(72) Inventor: **CARDINAUX, Fabien
70619 Stuttgart (DE)**

(74) Representative: **MFG Patentanwälte
Meyer-Wildhagen Meggle-Freund
Gerhard PartG mbB
Amalienstraße 62
80799 München (DE)**

(56) References cited:
• **GOLDHAMMER MICHAEL ET AL: "Pedestrian's
Trajectory Forecast in Public Traffic with Artificial
Neural Networks", INTERNATIONAL
CONFERENCE ON PATTERN RECOGNITION,
IEEE COMPUTER SOCIETY, US, 24 August 2014
(2014-08-24), pages 4110-4115, XP032698537,
ISSN: 1051-4651, DOI: 10.1109/ICPR.2014.704
[retrieved on 2014-12-04]**

(52) Cooperative Patent Classification (CPC): (Cont.)
     G01S 2013/9323

**Description**

TECHNICAL FIELD

The present disclosure generally pertains to the field of self-driving and driving-assisted cars, in particular to methods and electronic devices for predicting the movement of objects based on data captured by automotive imaging sensors.

TECHNICAL BACKGROUND

Advanced driver assistance systems are systems which help the driver of a motor-driven vehicle in the driving process. Advanced driver assistance systems increase the car safety and road safety. Safety features are designed to avoid accidents by notifying potential problems to a driver. In an advanced driver assistance system, the system may even implement safe guards by taking over control over the vehicle, for example by providing adaptive cruise control or automated braking.

The technology used in advanced driver assistance systems can also be applied in the development of self-driving cars. A self-driving car, also called autonomous car, is an automated or autonomous car which is capable of fulfilling the transportation capabilities of a traditional car without the necessity of a human driver conducting the car. An autonomous vehicle comprises sensors such as video cameras and radar systems, which enable the vehicle of sensing its environment and navigating without human input. The autonomous vehicle senses the surroundings with techniques such as computer vision, radar, lidar, GPS and advanced control systems, and interprets the sensory information to identify appropriate navigation paths and/or actions.

For example, in frequent situations an intelligent vehicle must differentiate between a pedestrian on the pavement who is about to cross the road and a pedestrian on the pavement who has no intention to cross the road. A standard approach to solve this problem is to detect the current and the past pedestrian position and, based on its speed and trajectory (and possibly a defined set of other factors), to predict the most likely future position of the pedestrian. The drawback of this approach is that a prediction is limited to the feature explicitly involved in the prediction (here speed, trajectory, etc.).

SUMMARY

According to a first aspect, the disclosure provides a method comprising capturing current and past data frames of a vehicle scenery with an automotive imaging sensor, and predicting, by means of a recurrent neural network, the future position of a moving object in the vehicle scenery based on the current and past data frames.

It is also disclosed a method comprising capturing a current data frame and past data frames of a vehicle scenery with an automotive imaging sensor, and using the current data frame and the past data frames as a training sample for training a recurrent neural network to determine the current position of a moving object in the vehicle scenery based on the past data frames.

According to a further aspect the disclosure provides an electronic device defined in claim 8.

Further aspects are set forth in the dependent claims, the following description and the drawings.

BRIEF DESCRIPTION OF THE DRAWINGS

Embodiments are explained by way of example with respect to the accompanying drawings, in which:

Fig. 1 shows a schematic representation of a current data frame captured by a vehicle front camera;
Fig. 2 shows a schematic representation of a predicted data frame representing a predicted vehicle front view obtained by a recurrent neural network;
Fig. 3 shows an embodiment of a probability map that contains the probabilities for a pedestrian to be at each respective position on the map;
Fig. 4 shows an embodiment of a method for predicting the future position of a moving object in a vehicle front scenery;
Fig. 5 shows a further embodiment of a method for predicting the future position of a moving object in a vehicle front scenery;
Fig. 6 shows a schematic representation of a LSTM unit;
Fig. 7 shows a schematic representation of an LSTM future predictor model, and
Fig. 8 schematically shows an embodiment of an electronic device for predicting the future position of a moving object in a vehicle scenery based on current and past data frames.

DETAILED DESCRIPTION OF EMBODIMENTS

Before a detailed description of the embodiments is given under reference to the drawings, some general explanations are made.

The embodiments described below disclose a method defined in claim 1.

The method may allow an advanced driver assistance system to make timely and appropriate decisions and it may help an intelligent vehicle to not only understand its environment but also predict what is going to happen next.

An automotive imaging sensor may be any system or device which provides sensor data that carries information of the environment of the vehicle. For example, a computer vision system such as a front camera (equipped with CMOS-image sensors), a radar device, a lidar device, a GPS device, or other devices may be used as an automotive imaging sensor. The automotive imaging sensor may also be a system that is comprised of multiple sensors of the same technique, such as multiple video cameras which capture a surround view of the vehicle surroundings. Still further, an automotive imaging sensor may combine several sensor types such as video and radar in order to obtain complex sensor data.

The output of these sensors may be collected in data frames, where each data frame corresponds to data of a particular point in time. A data frame may for example comprise video frames obtained by a front camera attached to a vehicle. A data frame may comprise two- or three-dimensional data, depending on the kind of sensor(s) used. For example, a computer vision system may be based on a single front camera, which is arranged to provide a two-dimensional image of the front view of the environment before the vehicle. Alternatively, two cameras may be used to provide a stereo view of the front scenery which results in three dimensional data. Still alternatively, techniques like radar and lidar may provide three-dimensional data which allows to obtain information about the distance of objects in the front scenery.

A recurrent neural network (RNN) is a class of artificial neural networks that comprises feedback connections. A recurrent neural network may for example arrange connections between units in a directed cycle. This may allow to generate internal states of the neural network, which allow it to exhibit dynamic temporal behavior. Recurrent neural networks provide an internal memory which allows to process a query sequence of inputs.

In the embodiments described below, a Long Short Term Memory (LSTM) network is used as recurrent neural network. A LSTM network is an artificial neural network that contains LSTM units as network blocks. An LSTM unit may be described as a smart network unit that can remember a value for a certain length of time. An LSTM unit may contain gates that determine when the input is significant enough to remember, when the LSTM unit should continue to remember or when it should forget the value, and when the LSTM unit should output the remembered value.

The present disclosure is however not restricted to this specific type of recurrent neural networks. Other recurrent neural networks may also be used.

A moving object may be any object in the environment of a vehicle which is of interest to an advanced driver assistant system or self-driving system. The moving object may for example be a pedestrian, which is on the pavement before the vehicle. Alternatively, the moving object may be another vehicle such as a car, a truck, a bicycle, or the like.

A vehicle scenery captured by the automotive imaging sensor may for example be a vehicle front scenery which is captured by a vehicle front camera. The method may however also use information from vehicle side cameras or rear cameras, which allow obtaining information from the vehicle surroundings. A vehicle scenery might for example comprise a pedestrian which is walking on the pavement or a child which is playing on the side of the street. A vehicle scenery may also comprise a front view of the street before the vehicle and other traffic participants.

Current and past data frames may be data frames obtained by the automotive imaging sensor in specific time steps. For example an automotive imaging sensor may provide sensor data at defined parts of a second (e.g. 20 data frames per second, or more, or less). In particular, the data frames may comprise raw sensor data. The data frames may be stored in a data storage or data cache for subsequent analysis and processing.

The future position of a moving object may be defined in several ways, for example by the shape of the moving object within a scene. Still further, the future position of a moving object may be defined by the center of mass of the moving object, or similar means.

Predicting the future position of a moving object comprises calculating a predicted data frame based on the captured data frames, and identifying the moving object in the predicted data frame. For example, the recurrent neural network may be trained to generate the images at time t+1 to t+m from images taken at time t-n to t.

A predicted data frame may for example have a data structure that is similar to the data structure of a current and a past data frame, as obtained by a recurrent neural network that has been trained to predict a sequence of future data frames based on a sequence of past data frames. The content of the predicted data frame reflects a hypothetic future data frame that resembles to a certain degree and with certain likelihood to a data frame that will be obtained by an automotive imaging sensor in the future. A predicted frame may for example be received from a recurrent neural network which takes current and past data frames as input and which provides one or more predicted data frames as output. For example, each data element of the predicted data frame may correlate with the output of a certain cell of a recurrent neural network.

In certain embodiments, the method comprises predicting multiple predicted data frames, where each predicted data frame corresponds to a certain future time. The multiple predicted data frames may for example relate to subsequent future points in time that are separated by a defined time interval.

The identifying of the moving object in the predicted data frame may for example be based on standard image analyzing methods that are known to the skilled person. For example, the shape of a pedestrian might be identified with known image matching or identification techniques. For example, for the pedestrians' prediction problem, one may apply standard pedestrian detection algorithm on the generated images to predict future pedestrian positions.

Alternatively, in a non claimed example, predicting the future positon of a moving object may also comprise determining a probability map, and identifying the future position of the moving object from the probability map. A probability map may be a data structure which attributes to each potential position of the moving object a certain probability or confidence level that the moving object will be positioned at a respective position in the future. The probability map may for example be a two-dimensional data field where each element contains a probability value or a confidence value.

For example each image in a video sequence can be labelled with a detected position of pedestrians using state-of-the-art algorithms and a recurrent neural network may be trained to predict the position of the most probable positions of the pedestrian at time t+1 to t+m based on images taken at time t-n to t. In the case the output of the recurrent neural network is a probability map for each time t+m containing the probability for a pedestrian to be at each position on the map.

Each data element of the probability map may correlate with the output of a certain cell of a recurrent neural network.

Identifying the future position of the moving object from a probability map may for example comprise identifying the element in the probability map that has the highest probability value or highest confidence value.

The disclosure thus provides a method to predict future environment variables based on current and past raw sensor data (e.g. image sensor) without having to explicitly extract information from the sensor's data (position of object and people). The future environment variables can be the sensor's state (image) itself. An advantage of the approach may be that the predictor can use all available information.

It is also disclosed a method comprising capturing a current data frame and past data frames of a vehicle scenery with an automotive imaging sensor, and using the current data frame and the past data frames as a training sample for training a recurrent neural network to determine the current position of a moving object in the vehicle front scenery based on the past data frames.

A recurrent neural network that has been trained by this method may, after training, be used to predict the future position of a moving object in a vehicle scenery based on current and past data frames. The recurrent neural network may be trained by any known method of training a recurrent neural network. For example the recurrent neural network may be trained by gradient descent, back-propagation, evolution strategies, genetic algorithms or other training methods.

The method may comprise training the recurrent neural network with a very large set of data frames, for example with a set of data comprising several thousand data frames, several ten thousand data frames, several hundred thousand data frames, or even more.

The embodiments also disclose an electronic device arranged to implement a recurrent neural network, the recurrent neural network being trained to predict the future position of a moving object in a vehicle scenery based on data frames captured with an automotive imaging sensor.

The recurrent neural network may comprise a LSTM encoder network and an LSTM decoder network. The recurrent neural network may also comprise multiple network layers.

The here described methods and devices may also be applied to other applications such as robotics or wearable devices such, e.g. smart eye wears.

Embodiments are now explained by reference to the accompanying drawings.

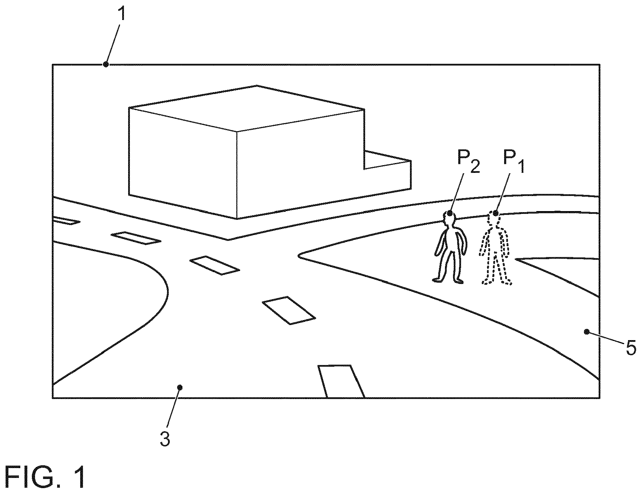

Fig. 1 shows a data frame 1 that represents automotive sensor data captured from a vehicle view. In particular, the data frame 1 represents a vehicle front scenery that has been captured with a vehicle front camera. The data frame 1 is a current data frame that comprises the image of a scenery before the vehicle as it is currently viewed by the vehicle front camera. The vehicle scenery comprises a road 3, a pedestrian way 5, and a pedestrian at a position $P_2$ which is moving on the pedestrian way.

In Fig. 1 a past position $P_1$ of the pedestrian is indicated by dashed lines. These dashed lines indicate the position of the pedestrian in a past data frame that was captured a certain time interval before the current data frame.

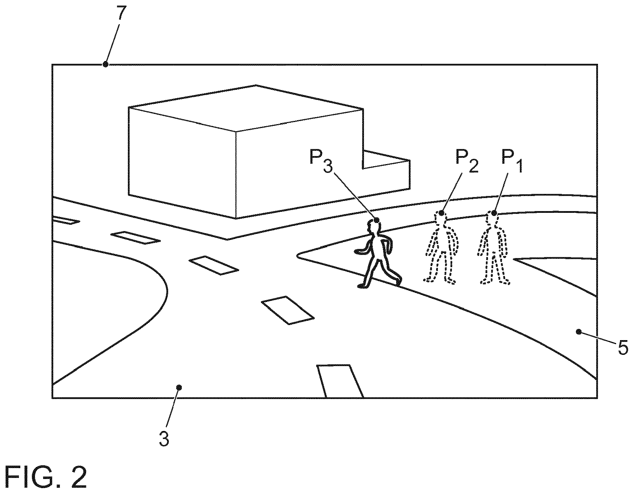

Fig. 2 shows a schematic representation of a predicted data frame 7. This predicted data frame 7 comprises an image which resembles that of the current data frame 1, however the pedestrian in this image has moved to a predicted position $P_3$. To illustrate the movement of the pedestrian, in Fig. 2 the current position $P_2$ and the past position $P_1$ of the pedestrian are indicated by dashed lines. It can be seen from Figs. 1 and 2 that according to the predicted position $P_3$ of the pedestrian, the pedestrian is predicted to leave the pedestrian way and enter the road so that a potential accident is expected to happen with some confidence should the vehicle not change its navigation track. This information obtained from predicted data frame 7 can be used by an advanced driver assistance system to issue a warning signal to a driver, or it may be used in a self-driving car to initiate actions such as changing the navigation path or activating the vehicle brakes in order to stop the vehicle.

According to the embodiments, the predicted data frame 7 of Fig. 2 is obtained by means of a recurrent neural network. The predicted data frame 7 as displayed in Fig. 2 may be obtained as output of a recurrent neural network, where each data element of the predicted data frame 7 corresponds to a the output of a network cell (e.g. a LSTM unit). That is, each data element of the predicted data frame 7 may be associated with a respective cell of the recurrent neural network.

According to the embodiments, the predicted data frame 7 is used to identify the future position of the pedestrian in the vehicle scenery based on current and past data frames. For example, the predicted shape of the pedestrian at position $P_3$ in predicted data frame 7 may be obtained by an image matching technique or by means of a shape detection technique to identify the pedestrian and to determine its position.

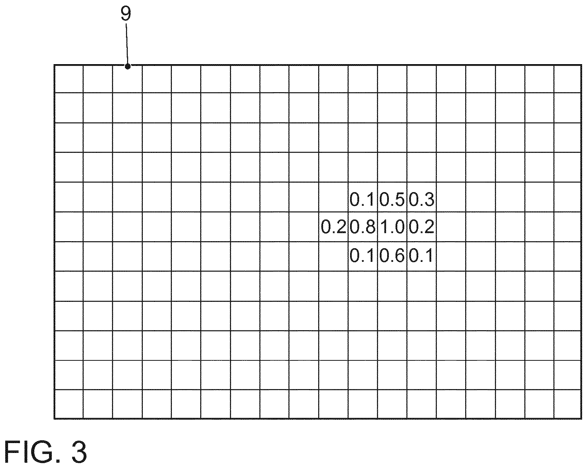

Fig. 3 shows an embodiment in which the output of a recurrent neural network is a probability map 9 that describes the probability for a pedestrian to be at each position identified by the map. The map is a two-dimensional data structure. Each data element of the probability map corresponds to a specific position a pedestrian might be located in. In the embodiment of Fig. 3 the data structure of the probability map represents a two-dimensional grid which corresponds to a two-dimensional image which might for example be obtained by a front view camera. Each data element in the data structure contains a number between 0 and 1 that describes the probability of a pedestrian being located in a position that is associated with the respective data element.

In the example of Fig. 3 the data values are normalized so that the data element with the highest probability has the probability value 1.0. All other data elements have smaller probability values between 0 and 1, for example probability values 0.1, 0.2, 0.3, 0.5, 0.6 and 0.8. In Fig. 3, elements with probability 0 are left blank and a probability value is only shown for elements with non-vanishing probability.

The probability map as displayed in Fig. 3 may be obtained as output of a recurrent neural network, where each element corresponds to the output of a network cell (e.g. a LSTM unit). That is, each data element of the data structure may be associated with a respective cell of the recurrent neural network.

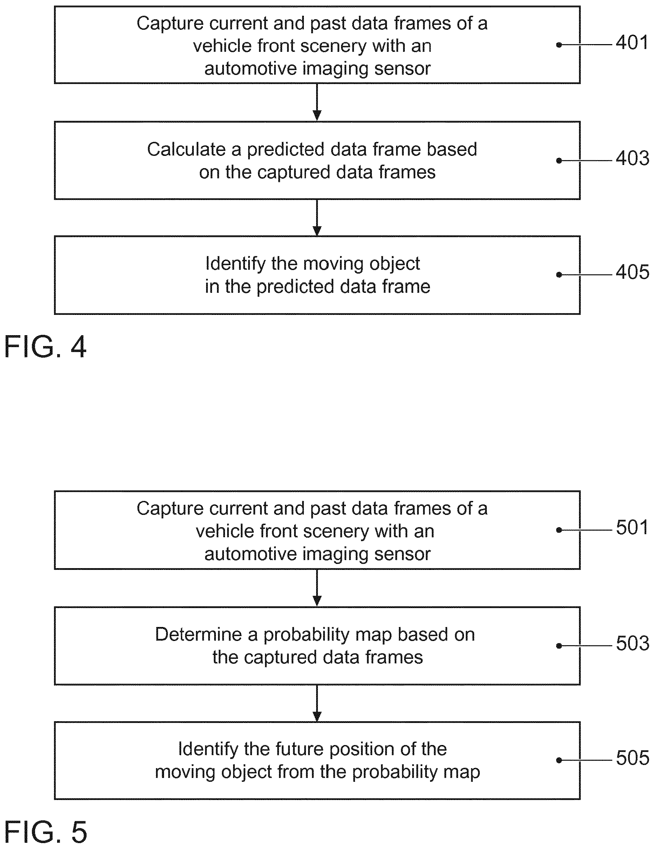

Fig. 4 shows a method for predicting the future position of a moving object in a vehicle scenery based on current and past data frames. At 401, current and past data frames of a vehicle front scenery are captured with an automotive imaging sensor. At 403, a predicted data frame is calculated based on the captured current and past data frames. At 405, the moving object is identified in the predicted data frame.

Fig. 5 describes a further embodiment of a method for predicting the future position of a moving object in the vehicle scenery based on current and past data frames. At 501, current and past data frames of a vehicle front scenery are captured with an automotive imaging sensor. At 503, a probability map is determined based on the captured data frames. At 505, the future position of the moving object is identified from the probability map.

In the following it is given a model description of a recurrent neural network that is based on the Long Short Term Memory (LSTM) network type. The model description follows the model description given by N. Srivastava et al in "Unsupervised learning of video representations using LSTM", e-print archive of Cornell University Library, arXiv:1502.0468v1, 16. Feb. 2015.

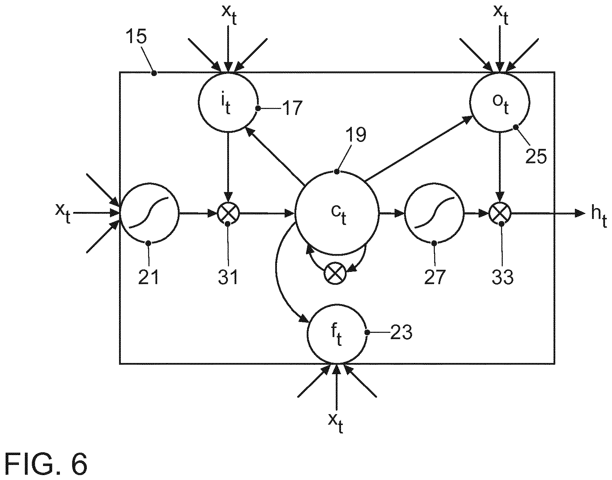

Fig. 6 gives a schematic representation of a LSTM unit which is the basic unit of the LSTM recurrent neural network. A LSTM unit 15 comprises an internal cell 19 which has a state $c_t$ at time $t$. Cell 19 acts as a memory unit. Reading or modifying of this memory unit is controlled through sigmoidal gates, namely input gate 17 that has a state $i_t$ at time $t$, forget-gate 23 that has a state $f_t$ at time $t$, and output-gate 25 that has a state $o_t$ at time $t$. The LSTM unit 15 further comprises a cell input 21 which receives a current frame $x_t$ as input. The gate and cell states are updated iteratively. At each time step the input-gate, output-gate, forget-gate and the cell input each receive the current frame $x_t$ as input. A second source of the LSTM unit is the previous hidden states $h_{t-1}$ (the cells' outputs) of all LSTM-units in the same layer at time $t$ - 1, i.e. at the previous time. The memorized cell state $c_{t-1}$ acts as an internal source. The links between a cell and its own gates are called "peephole connections". At each gate the inputs coming from different sources are added up along with a bias. The gates are activated by passing their total input through a logistic function.

In the following, $\mathbf{x}_t$ is a vector comprising as elements all inputs $x_t$ of the individual LSTM units of a network layer at time $t$, $\mathbf{i}_t$ is a vector of all input-gate states, $\mathbf{f}_t$ is a vector of all forget-gate states at time $t$, $\mathbf{o}_t$ is a vector of all output-gate states at time $t$, and $\mathbf{h}_t$ is a vector comprising all outputs of the LSTM units of the of a network layer at time $t$.

Further, $W_{xi}$ is the weight matrix between input and input-gate, $W_{hi}$ is the weight matrix between output and input-gate, $W_{ci}$ is the weight matrix between cell and input-gate, $W_{xf}$ is the weight matrix between input and forget-gate, $W_{hf}$ is the weight matrix between output and forget-gate, $W_{cf}$ is the weight matrix between cell and forget-gate, $W_{xc}$ is the weight matrix between input and cell, $W_{hc}$ is the weight matrix between output and cell, $W_{xo}$ is the weight matrix between input and output-gate, and $W_{co}$ is the weight matrix between cell and output-gate. As the peephole connections are internal to each LSTM unit, the $W_{cX}$ matrices are all diagonal matrixes. All other weight matrices $W$ may be chosen as dense matrices.

Still further, the vectors $\mathbf{b}_i$, $\mathbf{b}_f$, $\mathbf{b}_c$, and $\mathbf{b}_o$ represent biases for the input-gates, forget-gates, cells and, respectively, the output-gates.

The tanh function is used as non-linearity (21, 27 in Fig. 6).

The sigmoid function $\sigma$ acts as a logistic function of each gate.

An LSTM network layer is updated as follows.

First, activations $\mathbf{i}_t$ for the input gate and the forget-gate are computed at time $t$:

$$\mathbf{i}_t = \sigma(W_{xi}\mathbf{x}_t + W_{hi}\mathbf{h}_{t-1} + W_{ci}\mathbf{c}_{t-1} + \mathbf{b}_i)$$

Further, candidate state values $\tilde{\mathbf{c}}_t$ for the states of the memory cells are computed at time $t$:

$$\tilde{\mathbf{c}}_t = \tanh(W_{xc}\mathbf{x}_t + W_{hc}\mathbf{h}_{t-1} + \mathbf{b}_c)$$

Still further, activations $\mathbf{f}_t$ for the forget-gates are computed at time $t$:

$$\mathbf{f}_t = \sigma(W_{xf}\mathbf{x}_t + W_{hf}\mathbf{h}_{t-1} + W_{cf}\mathbf{c}_{t-1} + \mathbf{b}_f)$$

Given the values of the input-gates activations $\mathbf{i}_t$, the forget-gates activations $\mathbf{f}_t$ and the candidate state values $\tilde{\mathbf{c}}_t$ the memory cells' new states $\mathbf{c}_t$ at time $t$ are computed:

$$\mathbf{c}_t = \mathbf{f}_t\mathbf{c}_{t-1} + \mathbf{i}_t\tilde{\mathbf{c}}_t$$

With the new states $\mathbf{c}_t$ of the memory cells, the values of their output-gates can be computed:

$$\mathbf{o}_t = \sigma(W_{xo}\mathbf{x}_t + W_{ho}\mathbf{h}_{t-1} + W_{co}\mathbf{c}_t + \mathbf{b}_o)$$

Finally, the outputs $\mathbf{h}_t$ of the memory cells at time $t$ are computed according to:

$$\mathbf{h}_t = \mathbf{o}_t\tanh(\mathbf{c}_t)$$

In this embodiment the recurrent neural network used is designed according to the LSTM Future Predictor Model suggested by N. Srivastava in the reference cited above.

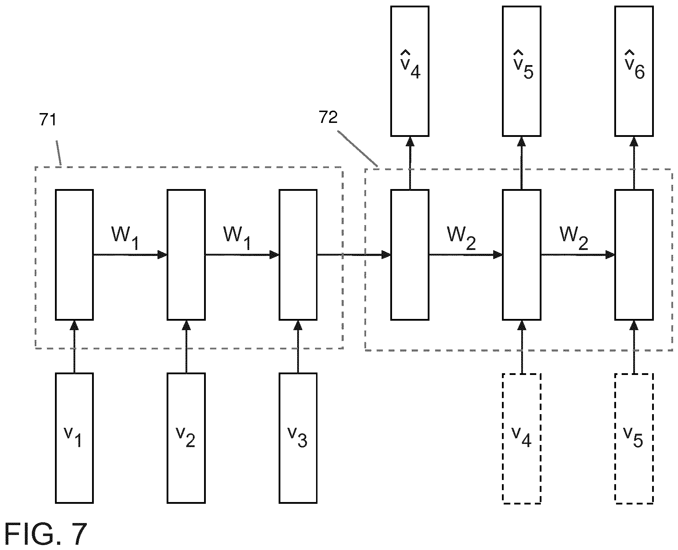

Fig. 7 shows a schematic representation of this LSTM Future Predictor Model. The model comprises two LSTM networks, an encoder LSTM 71 and a decoder LSTM 72. The decoder LSTM 72 predicts data frames that come after an input sequence of data frames. The input to the model is a sequence of vectors $v_1$, $v_2$, $v_3$ where each vector represents a data frame (current and past data frames as obtained by an automotive imaging sensor). The encoder LSTM 71 of Fig. 7 reads the vectors $v_1$, $v_2$, $v_3$ in this sequence. Each iteration of the encoder LSTM 71 is indicated in Fig. 7 by $W_1$. After the last input has been read, the learned representation is copied from the encoder LSTM 71 to the decoder LSTM 72. The decoder LSTM 72 then takes over and outputs an output sequence that comprises vectors $\hat{v}_4$, $\hat{v}_5$, $\hat{v}_6$ each of which represents a future data frame. Each iteration of the decoder LSTM 72 is indicated in Fig. 7 by $W_2$.

In alternative embodiments, multiple layers of LSTMs are stacked on top of each other. In this case, the LSTM units of the first layer receive a current frame $x_t$ as input and the LSTM units of the subsequent layers receive the output of the previous layer as input. Each layer can contain recurrent units (e.g. LSTM) or/and non-recurrent units.

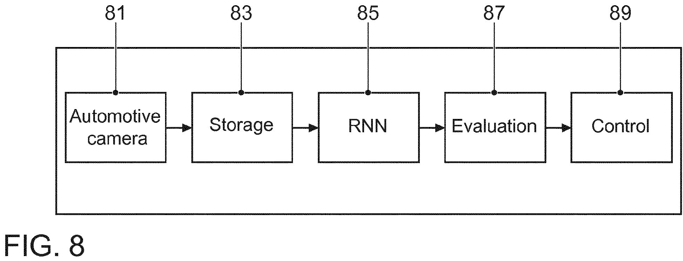

Fig. 8 schematically shows an embodiment of an electronic device for predicting the future position of a moving object in a vehicle scenery based on current and past data frames. The exemplifying electronic device comprises an automotive camera 81 for capturing current and past data frames of a vehicle scenery. A data storage 83 receives the current and past data frames from automotive camera 81 and stores these captured current and past data frames. A recurrent neural network 85 (RNN) is connected to the data storage 83 and is arranged to read the current and past data frames as input vectors. The recurrent neural network 85 passes its output vectors to an evaluation unit 87. The evaluation unit 87 is arranged to analyze the output vectors of the recurrent neural network 85 in order to determine the position of a moving object. For example, in the case that the recurrent neural network has been trained to output a probability map as described in Fig. 3, the evaluation unit 87 determines the data element of the probability map with the highest probability value and infers from this that the position which is associated with this data element is the most probable position of the moving object in the future. Based on this evaluation, the evaluation unit 87 may decide to take control actions such as activating the vehicle brakes or refining the vehicle navigation. The evaluation unit 87 passes respective instructions to a control unit 89, which initiates corresponding actions.

It should be noted that the division of the exemplifying device in Fig. 8 into units 81, 83, 85, 87, 89 is only made for illustration purposes and that the present disclosure is not limited to any specific division of functions in specific units. For instance, the recurrent neural network 85, the evaluation unit 87 and the control unit 89 could be implemented by a respective programmed processor, field programmable gate array (FPGA) and the like.

All units and entities described in this specification and claimed in the appended claims can, if not stated otherwise, be implemented as integrated circuit logic, for example on a chip, and functionality provided by such units and entities can, if not stated otherwise, be implemented by software. For example, the recurrent neural network 85 might be implemented in software or as dedicated hardware.

In so far as the embodiments of the disclosure described above are implemented, at least in part, using a software-controlled data processing apparatus, it will be appreciated that a computer program providing such software control and a transmission, storage or other medium by which such a computer program is provided are envisaged as aspects of the present disclosure.

**Claims**

1. A method comprising

    capturing current and past data frames of a vehicle scenery with an automotive imaging sensor,
    reading, by means of a recurrent neural network (85), the current and past data frames as input vectors, and
    predicting, by means of the recurrent neural network (85), the future position of a moving object in the vehicle scenery based on the current and past data frames, wherein
    predicting the future position (P3) of the moving object comprises calculating a predicted data frame based on the captured data frames and identifying the moving object in the predicted data frame.

2. The method of claim 1 wherein the recurrent neural network (85) is a Long Short Term Memory network.

3. The method of claim 1, wherein the recurrent neural network (85) comprises a LSTM encoder network and an LSTM decoder network.

4. The method of claim 1 wherein the recurrent neural network (85) is arranged to predict multiple future data frames from a sequence of current and past data frames.

5. The method of claim 1 wherein the moving object is a pedestrian.

6. The method of claim 1 wherein the automotive imaging sensor comprises an automotive video camera, and the data frames comprise two-dimensional video frames obtained from the automotive video camera.

7. The method of claim 1 in which the automotive imaging sensor comprises a radar device, and the data frames comprise radar data.

8. An electronic device arranged to implement a recurrent neural network, the recurrent neural network (85) reads data frames captured with an automotive imaging sensor and being trained to predict the future position (P3) of a moving object in a vehicle scenery based on data frames captured with the automotive imaging sensor, wherein predicting the future position (P3) of the moving object comprises calculating a predicted data frame based on the captured data frames and identifying the moving object in the predicted data frame.

9. The electronic device of claim 8, wherein the recurrent neural network (85) comprises a LSTM encoder network and an LSTM decoder network.

10. The electronic device of claim 9, wherein the recurrent neural network (85) comprises multiple network layers.

11. A computer program comprising program code causing a computer to

    capture current and past data frames of a vehicle scenery with an automotive imaging sensor,

**EP 3 278 317 B1**

read, by means of a recurrent neural network (85), the current and past data frames as input vectors, and predict, by means of the recurrent neural network (85), the future position (P3) of a moving object in the vehicle scenery based on the current and past data frames, wherein
predicting the future position (P3) of the moving object comprises calculating a predicted data frame based on the captured data frames and identifying the moving object in the predicted data frame.

**Patentansprüche**

1. Verfahren, umfassend

Erfassen aktueller und vergangener Datenrahmen einer Fahrzeugszenerie mit einem Automobil-Bildsensor, Lesen, mittels eines rekurrenten neuronalen Netzes (85), der aktuellen und vergangenen Datenrahmen als Eingabevektoren, und
Vorhersagen, mittels des rekurrenten neuronalen Netzes (85), der zukünftigen Position eines sich bewegenden Objekts in der Fahrzeugszenerie basierend auf den aktuellen und vergangenen Datenrahmen, wobei
das Vorhersagen der zukünftigen Position (P3) des sich bewegenden Objekts Berechnen eines vorhergesagten Datenrahmens basierend auf den erfassten Datenrahmen und Identifizieren des sich bewegenden Objekts in dem vorhergesagten Datenrahmen umfasst.

2. Verfahren nach Anspruch 1, wobei das rekurrente neurale Netz (85) ein Long-Short-Term-Memory-Netz ist.

3. Verfahren nach Anspruch 1, wobei das rekurrente neuronale Netz (85) ein LSTM-Codierer-Netz und ein LSTM-Decodierer-Netz umfasst.

4. Verfahren nach Anspruch 1, wobei das rekurrente neuronale Netz (85) dazu eingerichtet ist, mehrere zukünftige Datenrahmen aus einer Sequenz aktueller und vergangener Datenrahmen vorherzusagen.

5. Verfahren nach Anspruch 1, wobei das sich bewegende Objekt ein Fußgänger ist.

6. Verfahren nach Anspruch 1, wobei der Automobil-Bildsensor eine Automobil-Videokamera umfasst und die Datenrahmen zweidimensionale Videorahmen umfassen, die von der Automobil-Videokamera erhalten wurden.

7. Verfahren nach Anspruch 1, bei dem der Automobil-Bildsensor eine Radarvorrichtung umfasst und die Datenrahmen Radardaten umfassen.

8. Elektronische Vorrichtung, die dazu eingerichtet ist, ein rekurrentes neuronales Netz zu implementieren, wobei das rekurrente neuronale Netz (85) Datenrahmen liest, die mit einem Automobil-Bildsensor erfasst wurden, und darauf trainiert ist, die zukünftige Position (P3) eines sich bewegenden Objekts in einer Fahrzeugszenerie basierend Datenrahmen, die mit dem Automobilbildsensor erfasst wurden, vorherzusagen, wobei
das Vorhersagen der zukünftigen Position (P3) des sich bewegenden Objekts Berechnen eines vorhergesagten Datenrahmens basierend auf den erfassten Datenrahmen und Identifizieren des sich bewegenden Objekts in dem vorhergesagten Datenrahmen umfasst.

9. Elektronische Vorrichtung nach Anspruch 8, wobei das rekurrente neuronale Netz (85) ein LSTM-Codierer-Netz und ein LSTM-Decodierer-Netz umfasst.

10. Elektronische Vorrichtung nach Anspruch 9, wobei das rekurrente neuronale Netz (85) mehrere Netzschichten umfasst.

11. Computerprogramm, das Programmcode umfasst, der einen Computer veranlasst zum

Erfassen aktueller und vergangener Datenrahmen einer Fahrzeugszenerie mit einem Automobil-Bildsensor, Lesen, mittels eines rekurrenten neuronalen Netzes (85), der aktuellen und vergangenen Datenrahmen als Eingangsvektoren, und
Vorhersagen, mittels des rekurrenten neuronalen Netzes (85), der zukünftige Position (P3) eines sich bewegenden Objekts in der Fahrzeugszenerie basierend auf den aktuellen und vergangenen Datenrahmen, wobei
das Vorhersagen der zukünftigen Position (P3) des sich bewegenden Objekts Berechnen eines vorhergesagten Datenrahmens basierend auf den erfassten Datenrahmen und Identifizieren des sich bewegenden Objekts in dem vorhergesagten Datenrahmen umfasst.

**Revendications**

1. Procédé comprenant les étapes suivantes :

   capturer des trames de données actuelles et passées d'une scène de véhicule avec un capteur d'imagerie automobile, lire, au moyen d'un réseau neuronal récurrent (85), les trames de données actuelles et passées en tant que vecteurs d'entrée, et
   prédire, au moyen du réseau neuronal récurrent (85), la position future d'un objet mobile dans la scène du véhicule sur la base des trames de données actuelles et passées, où :

      la prédiction de la position future (P3) de l'objet mobile comprend le calcul d'une trame de données prédite sur la base des trames de données capturées et
      l'identification de l'objet mobile dans la trame de données prédite.

2. Procédé selon la revendication 1, dans lequel le réseau neuronal récurrent (85) est un réseau à mémoire à long et court terme.

3. Procédé selon la revendication 1, dans lequel le réseau neuronal récurrent (85) comprend un réseau encodeur LSTM et un réseau décodeur LSTM.

4. Procédé selon la revendication 1, dans lequel le réseau neuronal récurrent (85) est agencé pour prédire plusieurs trames de données futures à partir d'une séquence de trames de données actuelles et passées.

5. Procédé selon la revendication 1, dans lequel l'objet mobile est un piéton.

6. Procédé selon la revendication 1, dans lequel le capteur d'imagerie automobile comprend une caméra vidéo automobile, et les trames de données comprennent des trames vidéo bidimensionnelles obtenues par la caméra vidéo automobile.

7. Procédé selon la revendication 1, dans lequel le capteur d'imagerie automobile comprend un dispositif radar, et les trames de données comprennent des données radar.

8. Dispositif électronique agencé pour mettre en œuvre un réseau neuronal récurrent, le réseau neuronal récurrent (85) lit des trames de données capturées avec un capteur d'imagerie automobile et étant formé pour prédire la position future (P3) d'un objet mobile dans une scène de véhicule sur la base de trames de données capturées avec le capteur d'imagerie automobile, où la prédiction de la position future (P3) de l'objet mobile comprend le calcul d'une trame de données prédite sur la base des trames de données capturées et l'identification de l'objet mobile dans la trame de données prédite.

9. Dispositif électronique selon la revendication 8, dans lequel le réseau neuronal récurrent (85) comprend un réseau codeur LSTM et un réseau décodeur LSTM.

10. Dispositif électronique selon la revendication 9, dans lequel le réseau neuronal récurrent (85) comprend des couches de réseau multiples.

11. Programme informatique comprenant un code de programme amenant un ordinateur à :

   capturer des trames de données actuelles et passées d'une scène de véhicule avec un capteur d'imagerie automobile, lire, au moyen d'un réseau neuronal récurrent (85), les trames de données actuelles et passées en tant que vecteurs d'entrée, et
   prédire, au moyen du réseau neuronal récurrent (85), la position future (P3) d'un objet mobile dans la scène du véhicule sur la base des trames de données actuelles et passées, où :

      la prédiction de la position future (P3) de l'objet mobile comprend le calcul d'une trame de données prédite sur la base des trames de données capturées et
l'identification de l'objet mobile dans la trame de données prédite.

FIG. 1

FIG. 2

FIG. 3

```
┌─────────────────────────────────────────┐
│  Capture current and past data frames of a │
│     vehicle front scenery with an          │●──── 401
│        automotive imaging sensor           │
└─────────────────────────────────────────┘
                    │
                    ▼
┌─────────────────────────────────────────┐
│   Calculate a predicted data frame based   │
│        on the captured data frames         │●──── 403
└─────────────────────────────────────────┘
                    │
                    ▼
┌─────────────────────────────────────────┐
│         Identify the moving object         │
│          in the predicted data frame       │●──── 405
└─────────────────────────────────────────┘
```

FIG. 4

```
┌─────────────────────────────────────────┐
│  Capture current and past data frames of a │
│     vehicle front scenery with an          │●──── 501
│        automotive imaging sensor           │
└─────────────────────────────────────────┘
                    │
                    ▼
┌─────────────────────────────────────────┐
│    Determine a probability map based on    │
│          the captured data frames          │●──── 503
└─────────────────────────────────────────┘
                    │
                    ▼
┌─────────────────────────────────────────┐
│        Identify the future position of the │
│      moving object from the probability map│●──── 505
└─────────────────────────────────────────┘
```

FIG. 5

FIG. 6

FIG. 7

81      83      85      87      89

| Automotive camera | → | Storage | → | RNN | → | Evaluation | → | Control |

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Unsupervised learning of video representations using LSTM. **N. SRIVASTAVA et al.** arXiv:1502.0468v1. Cornell University Library, 16 February 2015